# EUROPEAN PATENT APPLICATION

(11) **EP 0 962 902 A1**
(43) Date of publication of application: **08.12.1999**
(21) Application number: 99304206.8
(22) Date of filing: 28.05.1999
(51) Int. Cl.: G07F 19/00

(54) **System and method for alerting a payee of a return item notification or "on-us" determination**

(30) Priority: 04.06.1998 US 90640
(71) Applicant: Carreker-Antinori, Inc., Dallas, Texas 75240 (US)
(72) Inventor: Richter, Victoria H., Dallas, Texas 75208 (US)
(74) Representative: Jackson, Richard Eric

(57) **Abstract**

For use with an electronic item presentment system in which a payor financial institution (FI) transmits to a presenting FI a return item notification corresponding to an item presented by the presenting FI to the payor FI or in which the payor FI makes a determination that an item is "on-us," a system for, and a method of, alerting a payee of the item of the return item notification or determination. In one embodiment, the system includes: (1) an alert filter that determines whether the payee is to be alerted of the return item notification and (2) an alert transmitter, coupled to the alert filter, that generates an electronic alert message for the payee only when the alert filter determines that the payee is to be alerted of the return item notification. In another embodiment, the system includes: (1) an alert assembler that combines "on-us" data of the payor FI and data pertaining to the item to assemble an electronic alert message and (2) an alert transmitter, coupled to the alert assembler, that transmits the electronic alert message to the payee.

## Description

### TECHNICAL FIELD OF THE INVENTION

The present invention is directed, in general, to a computer system and, more specifically, to a system and method for alerting a payee of a return item notification or "on-us" determination.

### BACKGROUND OF THE INVENTION

Check fraud has been a problem for both financial institutions (FIs) and retailers for decades, and the incidence involving check fraud has been on the increase for the last several years. The retailer (payee) to whom the check is written generally does not know that the check is potentially fraudulent and thus accepts the check as payment for goods purchased, services rendered or to satisfy an obligation. In the usual course of business, the payee then tenders the check for payment to the payor's FI through its own depositing FI. The payor's FI then makes a determination whether the account has sufficient funds to cover the check. If not, the payor's FI refuses payment on the check and returns the unpaid check to payee's FI and if the returned check is not resubmitted to the payor's financial institution then the payee's FI sends the return check to the payee. The immediate victim in this scenario is, of course, the payee to whom the check is written, and the cost to the payee is, at a minimum, the amount of the fraudulent check. Where the payee is an individual, that person, unfortunately, must absorb that cost. However, in those instances where the payee is a retailer, the cost is typically passed on in the form of increased prices to consumers in general, who collectively then become the ultimate victims. The cost to retailers associated with fraudulent check writing is substantial. In fact, it is estimated that retailers loose approximately $5 billion dollars annually in profits due to fraudulent checks. Thus, fraudulent check writing poses a significant problem.

Both civil and criminal enforcement against fraudulent check writers are, unfortunately, difficult and most often will not lead to a payee's complete financial restoration. Habitual fraudulent check writers are difficult for the authorities to apprehend because they can easily move from one geographical locale to another and successfully evade the authorities while continuing to write fraudulent checks. Even when apprehended, however, they are usually financially incapable of making full financial restitution to the payees.

In an attempt to mitigate the problem of fraudulent check writers, retailers, in the past, have often relied on the "best judgment" of their cashiers or store managers, who examined photo ID cards, such as driver's licenses, and evaluated checks against established local procedures. This process, however, has been only minimally effective and does not alert the retailers to the more sophisticated fraudulent check writers. Additionally, retailers have turned to check-guarantee companies. Guarantee companies typically reimburse retailers if an approved check is returned for fraudulent reasons and also takes on the obligation of collecting the funds from the payor. While these companies do protect the retailers from the financial risk, their services are costly, and, again, this cost is typically passed on to the consumers through increased prices for services or goods.

FIs also have attempted to mitigate the problem by automating the FI check exchange process. In the past, FIs, primarily comprising banks, handled the transfer and presentment of items, often largely comprising checks, for payment in a manual, paper-based fashion. At specified times each day, "sending" FIs sorted all checks presented to them from depositors and other correspondent FIs into bundles, with the bundles containing checks for the particular FIs on which they are drawn ("drawee" or "paying" FIs). As the bundles of checks were sorted for particular paying FIs, they were segregated into batches of about 300 checks according to their American Banking Association (ABA) assigned routing/transit numbers (R/Ts). One or more of these batches were then aggregated for shipment to the paying FI. A detail listing of all checks within the batch and a cover letter were attached to each shipment of checks and summarized the contents of the batch. Such summary information comprised the name of the paying FI, the preassigned R/T associated with the name of the paying FI, the number of checks in the shipment and the total dollar amount of all of the checks in the batch. The cover letter was termed a "cash letter." The sending FI then transferred by physical transportation means, to the paying FI, the cash letter and the bundles of checks.

When the paying FI receives the cash letter, it verifies that the contents of the cash letter, i.e., the check amounts, balance with the totals contained on the cover letter. After a check processing function and posting process, the paying FI determines whether the account on which each check is drawn may be paid. If the paying FI rejects payment of the check, it slates the check for return. The paying FI then notifies the sending FI regarding any balancing discrepancies or any items that are to be returned. The return is accomplished by physical transportation of the returned check to the sending FI that originally accepted the check.

A typical instance in which this paper-based presentment and routing process occurs is when, for example, an FI depositor receives a check from another party that is drawn on an FI other than the depositor's FI and the depositor presents the check to the depositor's own FI for payment, either in cash immediately or by crediting the depositor's account as a deposit. For the depositor's FI to collect on the check presented by the depositor, the depositor's FI (the sending FI or "FI of first deposit") "presents" the check to the paying FI for deduction from the account of the drawer of the check. In this role, the sending FI becomes the "presenting" FI. Once the paying FI receives and processes the check, it essentially pays the amount of the check to the sending FI through a settlement process. In this role, the paying FI is legally referred to as the "payor" FI. Additionally, in terms of the delivery of items presented to the paying FI by a presenting FI for payment, the paying FI may be referred to as the "receiving" FI.

A first problem resulting from the above process is the delay between the time a check is first deposited at the sending FI and the time the paying FI accepts or rejects the check. The sending FI has the choice of either placing a hold on the depositor's FI account until it is notified of acceptance by the paying FI or it pays out the money to the sending FI and incurs the risk that the check will be rejected by the paying FI as an unpaid check.

Many FIs choose not to incur such a risk and therefore place a hold on the depositor's FI account until it is notified that the check has been accepted and paid, i.e., debited to the paying FI's account. However, the time that it takes for the sending FI to be notified that a check has been accepted or rejected may take as long as 7 to 14 days, depending on the proximity of the FIs. The Expedited Funds Availability Act of 1987, however, places limits on the length of time that an FI may retain a hold on a depositor's funds. In most cases, only two days are allowed for local items and only three days for non-local items. These time limits can severely expose an FI to risks of loss and fraud by forcing an FI accepting depositors' deposits to release funds to those depositors prior to verification that those funds are, in fact, collectable from the paying FI.

To overcome the problem of delay, FIs have attempted to automate the process of gathering checks into cash letters, sending and receiving cash letters and reconciling these cash letters against their contents. Such attempts at automation have included the installation of check sorter machines that scan checks at very high speeds and sort these checks into separate bundles associated with each paying FI. Conventional check processing methods employed by most U.S. FIs and other FIs now process checks and credits using high speed reader/sorter equipment such as IBM 3890s or Unisys DP1800s. The sorter "reads" information contained on the checks such as the R/T, the FI depositor's account number, the check serial number and the amount of the check. This information is contained in a line of symbols at the bottom of each check in Magnetic Ink Character Recognition (MICR) form in a font called E13B. After reading and validation, the equipment transfers such information through data processing means to electronic data storage devices. Check sorter machines have been used quite successfully and are well known in the art.

Another attempt at automating the check process is the use of computer systems to record and manage the information associated with the check sorting procedure. Such computer systems interface with the check sorter machines and allow the computer systems to build database information associated with each check that is read. This allows an operator of a computer system to obtain information on checks that have been read such as the total number of checks drawn on specific FIs and the total dollars of all checks drawn on specific FIs. Such systems that accomplish this task are the IBM Check Processing Control System (CPCS) and the Unisys Item Processing System (IPS).

Although both of the above attempts have benefitted the industry, they have failed to address the problem of delays associated with both the transfer of cash letters between FIs and the notification of non-payment of a check. Better transportation, overnight express and other services have helped to improve the physical transfer of cash letters between FIs, but the transfer of the information contained in the cash letters has still been dependent on the physical delivery of the cash letters to each of the paying FIs. Such dependence on the physical transfer of the cash letters perpetuates the delay associated with non-payment of returned checks.

A further attempt at improving the electronic check processing system and data processing apparatus incorporates a system for providing early electronic check return notifications arising from non-electronic check presentment exceptions. The system establishes an electronic version of the cash letter that precedes the paper version through the presentment process to the paying FI. If the paying FI "returns" an item, an electronic indication of that "return" is reflected back to the sending FI, preferably prior to submission of the paper item to the paper-based presentment process. Thus, the system provides early warning between FIs to allow a sending FI to avoid the subsequent paper-based presentment process and to institute defensive, preventive, remedial or corrective (together, "protective") action to prevent release of uncollected deposited funds to the depositor.

Although improvements have made great strides between FIs initiating this protective action, there has been little initiative in the banking area to provide a similar type of early warning alert system to the payee of the potential check returns. One problem that has grown out of the banking arena is a direct result from the electronic presentment process that superseded the paper-based presentment process. The computerized process emerged differentiating checks that are drawn on the FIs own accounts from those of different FIs, with the focus to speed up the process of paper presentment between FIs. The high speed sorters separate the checks according to the MICR line information and where the payor and payee FI are the same entity, checks are distinguished as that of an in-house grouping known as "on-us" items. On-us items are treated differently in the electronic process and are not similarly processed as with checks being sent to other FIs. In other words, each FI treats the on-us checks particular to its own system. The problem is magnified by the fact that a payee's FI can communicate return check information to its payee from a different FI faster than it can from its own on-us return check information.

Additionally, even with the Expedited Funds Availability Act placing limits on the length of time that an FI may retain a hold on a depositor's funds, there is still a significant elapsed period of time from the initial payee deposit to the final return notice to the payee. Typically the return check process for payee's FI to a payee after a payor has tendered a check to the payee works in the following manner. *Day 1:* The check is written to the payee by the fraudulent check writer. *Day 1-2:* The payee deposits the fraudfeasor's check into its account at payee's FI. *Day 2-3:* Payee's FI routes the check internally (on-us items) or forwards the check to the payor FI. *Day 3-5*: Payee's FI determines internally or through the electronic check presentment process that the fraudfeasor's check is insufficient. *Day 5-6*: Payee's FI gets the return check back from the payor's FI and debits the payee's account. *Day 7*: The payee's FI may try to redeposit the returned check through the payor's FI and restart the process, or alternatively, the payee's FI returns the bad check to the payee. The normal processing time then from the initial check writing to the payee to the final notice of return to the payee from payee's FI is 7 to 14 days. And the amount of lapsed time for notice to the payee is based on whether the fraudulent check writer's check is drawn on a local or non-local FI and whether the return item is an internally processed return item.

Typically, in check fraud schemes the fraudfeasor knows the approximate amount of time that it takes FIs days to process a return check. With this knowledge, the fraudfeasor maximizes its check kiting efforts by writing as many bad checks as quickly as it can until the fraud discovery is made by the payee through its FI. If the FI could alert the payee more timely of its knowledge of returned checks then the number of bad checks being passed by the fraudfeasor could be seriously curtailed, consumers would not have to absorb the costs of the bad checks, and millions of dollars would be saved.

Accordingly, what is needed in the art is a faster way to alert payees of item presentment problems (such as returns and "on-us" determinations) that may indicate fraud to allow the payee to make decisions as to how to respond to future items originating from the same maker.

### SUMMARY OF THE INVENTION

To address the above-discussed deficiencies of the prior art, the present invention provides, for use with an electronic item presentment system in which a payor FI transmits to a presenting FI a return item notification corresponding to an item presented by the presenting FI to the payor FI or in which the payor FI makes a determination that an item is "on-us," a system for, and a method of, alerting a payee of the item of the return item notification or determination. In one embodiment, the system includes: (1) an alert filter that determines whether the payee is to be alerted of the return item notification and (2) an alert transmitter, coupled to the alert filter, that generates an electronic alert message for the payee only when the alert filter determines that the payee is to be alerted of the return item notification. In another embodiment, the system includes: (1) an alert assembler that combines "on-us" data of the payor FI and data pertaining to the item to assemble an electronic alert message and (2) an alert transmitter, coupled to the alert assembler, that transmits the electronic alert message to the payee.

The present invention therefore introduces the broad concept of extending electronic notification of item refusal (whether by transit or "on-us") to the payee of the item. The payee is afforded advance notification of presentment problems that may assist the payee in making decisions regarding whether or not to accept items in the future from the maker of the item. "Item" is defined for purposes of the present invention as an instrument, such as a draft, check or note, that can enter and be processed through a presentment system.

In one embodiment of the present invention, the electronic alert message contains the return item notification. In fact, the return item notification can constitute the entirety of the electronic alert message. Alternatively, portions of the return item notification may be removed to form the electronic alert message.

In one embodiment of the present invention, the alert filter further determines a communication mode for transmission of the electronic alert message, the alert transmitter transmitting the electronic alert message to the payee via the communication mode. The communication mode may be computer data link, facsimile, paper or oral report or any other conventional or later-developed means by which information can be transmitted from one party to another.

In one embodiment of the present invention, the payor FI transmits the return item notification via at least one intermediary. Those skilled in the art are familiar with check presentment in which items (such as checks) may pass through banks, clearinghouses or other FIs in transit from the presenting FI to the payor FI.

In one embodiment of the present invention, the return item notification is selected from the group consisting of: (1) a preliminary return item notification and (2) a final return item notification. Likewise, the "on-us" determination may be selected from the group consisting of: (1) a preliminary "on-us" determination and (2) a final "on-us" determination.

In one embodiment of the present invention, the presenting FI presents the item to the payor FI a second time, the alert filter further determining whether the payee is to be alerted the second time. Presentment processes may include multiple rounds of presentment and return or repeated "on-us" determination. The present invention is not limited to single-round embodiments.

In one embodiment of the present invention, the return item notification causes the presenting FI to debit an account of the payee. Alternatively, the presenting FI may elect to debit the payee's account only upon receipt of a second, final return item notification.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### BRIEF DESCRIPTION OF THE DRAWINGS

For a more complete understanding of the present invention, reference is now made to the following descriptions taken in conjunction with the accompanying drawings, in which:
FIGURE 1A illustrates a block diagram of one embodiment of a system for alerting a payee of return item information;
FIGURE 1B illustrates a block diagram of exemplary general purpose data processing, storage and communication circuitry that can reside within the system of FIGURE 1A to effect operation thereof;
FIGURE 2 illustrates a schematic diagram, in flow chart form showing a basic check presentment and processing system using an electronic check presentment system between different FIs;
FIGURE 3 illustrates a flow diagram of one embodiment of a method of a return item notification for a payee in which a payor's check has been rejected for payment; and
FIGURE 4 illustrates a flow diagram of one embodiment of the payee's FI method of alerting payees of return item notifications.

### DETAILED DESCRIPTION

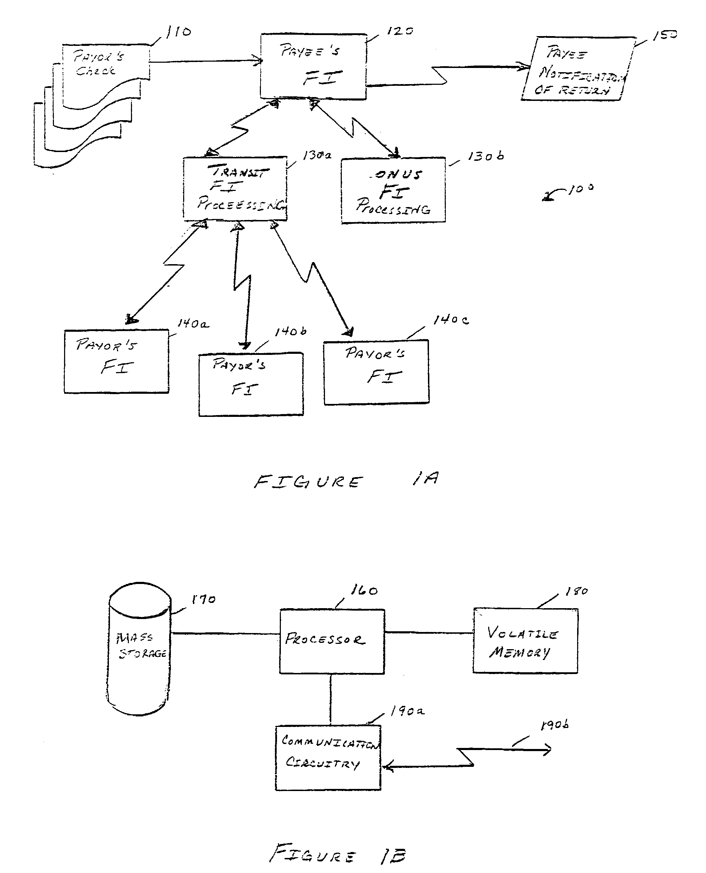

Referring initially to FIGURE 1A, illustrated is a block diagram of one embodiment of a system for alerting a payee of return item notification from the same or different FIs as that of the payee according to the principles of the present invention.

The system, generally designated 100, comprises the deposit and credit to the payee of payor's check ("item") 110 by the payee's FI and comprises a plurality of FIs, if payee and payor FIs are not the same institution, that have the payor and the payee account information. "Item" is defined for purposes of the present invention as an instrument, such as a draft or check that can enter and be processed through a presentment system.

The payee's FI 120, may be a bank, brokerage house or any other kind of entity that maintains FI accounts from which payments and deposits can be made. The payee's FI 120 is capable of gathering and sorting, by some means (illustrated in FIGURE 1A with unreferenced communication links), with databases 130a and 130b within the payee's FI 120 that provide the opportunity of processing the deposited check and returning information to payee's FI as to returned items.

FIGURE 1A further shows a plurality of payor FIs 140a, 140b, 140c. These payor FIs represent FIs that are different entities than the payee's FI and may be a bank, brokerage house or any other kind of entity that maintains FI accounts from which payments and deposits can be made of the particular payor. Checks are presented for payment in these inter-FI transactions through a check presentment process ("transit") (now usually electronic) by gathering, sorting and sending by some means (illustrated in FIGURE 1A with unreferenced communication links) . After the presentment through the transit process, the payor FIs send the payee's FI return notification and items that will not be honored or paid by the payor FI.

Additionally, FIGURE 1A shows the on-us presentment process 130b where the payee and payor have accounts at the same FI and information is ascertained internally on the validity of the payor check.

Once the payee's FI receives return item information, whether this information is derived internally or through the external presentment process, it then makes an intelligent decision whether to reprocess the check by resubmitting it through 130a or 130b, as the case might be, and/or alerting the payee 150 of the return item. Additionally, if the payee FI determines that the item is a final return item, the returned check will be sent to the payee.

Turning now to FIGURE 1B, illustrated is a block diagram of exemplary general purpose data processing, storage and communication circuitry that can reside within the system of FIGURE 1A to effect operation thereof. The circuitry comprises a processor 160, a mass storage unit 170, volatile memory 180 and communication circuitry.

The circuitry illustrated in FIGURE 1B is intended to represent a wide array of computing platforms. Accordingly, the circuitry may be a mainframe, minicomputer or personal computer (PC) or any combination thereof. The present invention is not limited whatsoever to a particular class of computing platform. With reference back to FIGURE 1A and continuing reference to FIGURE 1B, each of the FIs 120, 140a, 140b, 140c, the transit FI processing 130a, the on-us FI processing 130b, and the payee notification process may have the circuitry illustrated in FIGURE IB associated therewith.

Any of the communication links illustrated in FIGURE 1A may be initiated by the communication circuitry 190a of FIGURE 1B. Accordingly, the communication circuitry 190a is shown with an exemplary communication link 190b extending therefrom. The communication link 190b may be a dial-up communication, allowing communication sessions to be established and ended, may be a dedicated line or hardwired link coupling the communication circuitry 190a to communication circuitry associated with another computer system, or maybe another type of communications device.

The present invention introduces a data collection and filtering system that includes data storage and communication systems. These systems are preferably embodied in sequences of software instructions that are storable in the mass storage unit 170 or volatile memory 180 and are executable in the processor 160 to gather, combine, sort, filter and store data and, by means of the communication circuitry 190a, transmit data to, or receive data from, other computer systems.

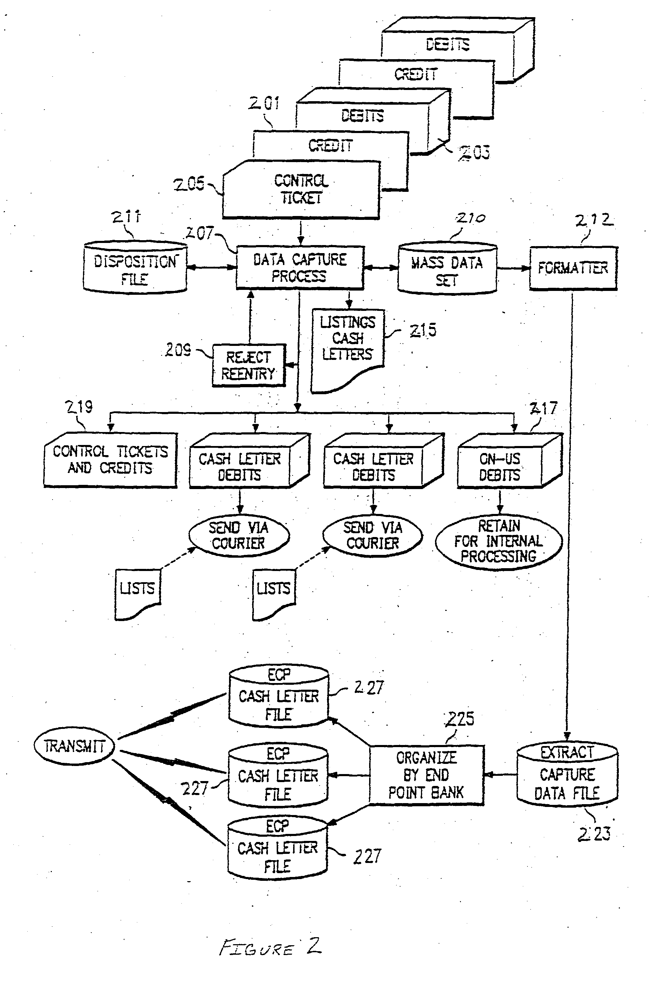

Turning now to FIGURE 2, illustrated is a flow diagram of one embodiment of a electronic check presentment (ECP) system as it is used by a depository FI, see, U.S. Patent No. 5,412,190 issued May 2, 1995, entitled "Electronic Check Presentment System Having a Return Item Notification System Incorporated Therein." The processes illustrated include the gathering of financial transactions and their entry into a conventional check processing system, as well as the generation of ECP cash letter files that are subsequently prepared for transmission to a payor FI.

Batches of entries in the form of credits (deposit tickets) 201 and debits (checks) 203 are received at the payee's FI. These batches comprise deposit sets having the credits 201 preceding the associated debits 203 for each deposit. Ordinarily, a number of batches are combined together to form a block. The block is preceded by a control ticket 205 comprising the block. The blocks are then presented for data capture. During the data capture process 207, the blocked batches of credits 201 and debits 203 are processed through high speed reader/sorter devices such as an IBM 3890 or a Unisys DP 1800 to read, validate, microfilm and extract the encoded information contained on each document. The physical documents are then directed to pockets on the reader/sorter to distribute the document to its applicable payor FI as determined by the transit/routing number on the check. Conventional systems such as the IBM CPCS or Unisys IPS perform the data capture function. Documents that do not pass validation rules are rejected during the data capture process 207 and are repaired and reintroduced into the process through a rejected entry means 209.

During the data capture process 207, each credit document 201 is further examined to determine the selected disposition of the checks or debits 203 that follow, in the event that a subsequent process at the payor FI determines that a check is to be returned unpaid. The examination comprises reading and extracting the credit account number of the credit document and using the account number to match the same account number in the disposition file 211. Alternatively, the contents of other data within the document MICR line can be examined to determine the selected disposition, thereby eliminating the need for the disposition file 211. Using either method, the checks 203 following in the transaction set are appended with the contents of the selected disposition code and selected preliminary and/or final return item ("PRNOTE" or "FRNOTE") eligibility flag, along with the contents of the full MICR code line, and this data is written to the mass data set file 210. Listings 215 of each credit 201 and debit 203 within the block are prepared for control accounting and cash letter purposes and to provide cash letters 215 that are associated with the physical checks 203. The checks 203 are then dispatched in the form of a cash letter, with their listings, to the designated payor FI. On-us debits 217, control tickets and credits 219 are retained by the FI performing the capture and sorting operations for subsequent separate processing.

The data capture process 207 performs the extract formatter function 212 from the mass data set 210 created during the capture process. The extract, at this point, contains the details of each captured check, along with the applicable disposition code - through subsequent processing means, the extract capture data file 223 is sorted to organize the file by endpoint FI according to step 225; after which separate ECP cash letter files 227 are created that enter the ECP cash letter network where the files are transmitted to each of the endpoint FIs in the form of an electronic cash letter.

The transmitted ECP file is received at the payor FI and is processed through the various ECP processes. During the conventional DDA process, each ECP check record is debited to the applicable payor's account. If the ECP check amount is unable to be debited because of an insufficient account balance or some other unprocessable exception condition, an exception record is created. The exception record will then contain, through data processing transfer techniques, the coded instruction that were included in the original ECP record sent to payor's FI. The payor FI then interprets the coded instructions as to the applicable method of handling a returned check and notifies payee's FI.

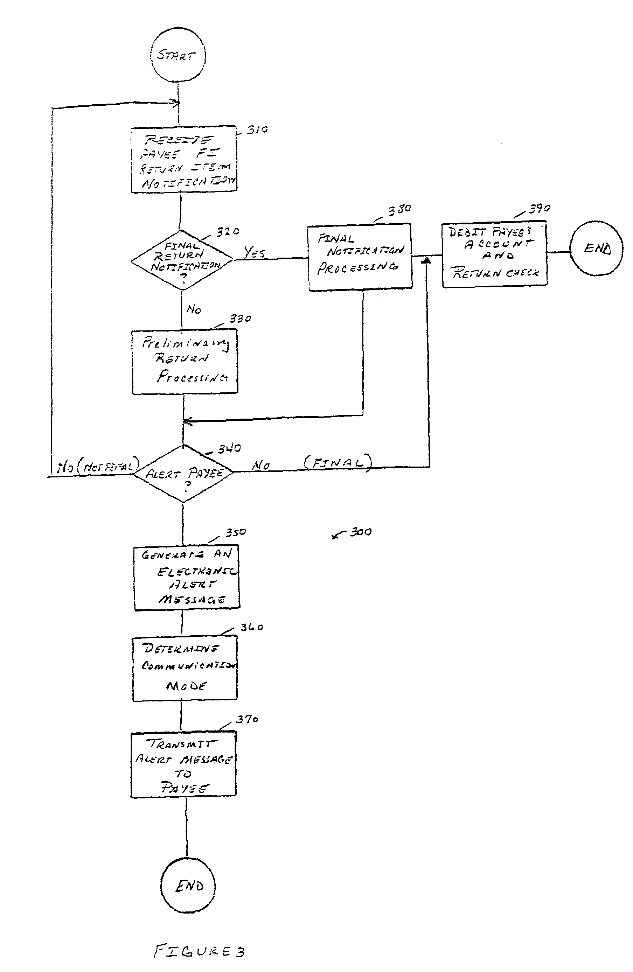

Turning now to FIGURE 3, illustrated is a flow diagram of one embodiment of a method, of alerting a payee of a return item notification from its FI. The method, generally designated 300, begins with the receipt by the payee's FI of a return item notification 310. A determination is then made if the item is a final return item 320. If not, the preliminary return process is initiated 330 for redeposit of the payor's check. Next, the determination is made as to whether the payee is to be alerted of the return item notification 340. If the determination is made that the payee is to be alerted then an electronic alert message is generated 350. Once the alert message generation process occurs a further determination of the type of communications mode that will be used for the alert message 360. Once the communications mode for the alert message is determined then the final step of transmitting such alert message to the payee is completed 370.

If, during the return item notification process, it is determined that the item is a final return item, then the final notification process is implemented 380 and a subsequent determination of alerting the payee is made. If the payee is to be alerted of the final return notification then the steps for generation of the alert message 350, communication mode 360, and transmission to the payee 360 are followed and the payee's FI then finishes the final return process step of debiting the payee's account and returning the payor's uncollected check 390.

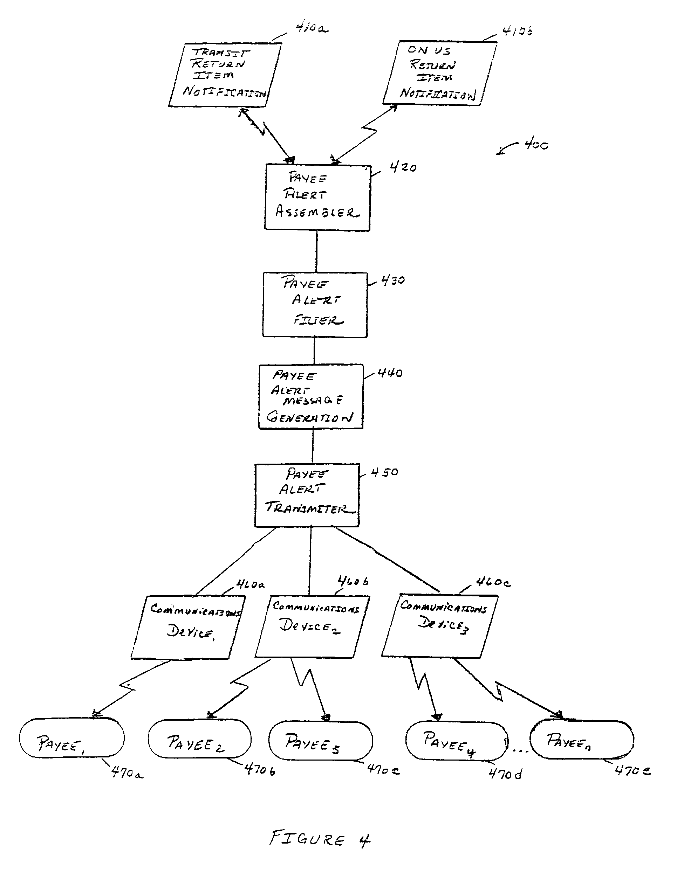

Turning now to FIGURE 4, illustrated is a flow diagram of one embodiment of a method, generally designated 400, of a payee's FI method of alerting payees of return item notifications.

Initially the payee's FI receives return item notifications from two sources: transit return item notifications from payor FIs and internally determined on-us return items by the payee's FI, 410a and 410b respectively. This return item notification information is collected by the payee FI alert assembler 420 by combining transit and on-us item return information. Payee alert assembler items are then filtered by the payee alert filter 430 to determine which return items should generate a payee alert message 440. Once the determination that an alert message is necessary, messages are constructed for those payees to be alerted 440. The next step invokes the payee alert transmitter 450 to select the mode of communication, 460a, 460b and 460c, of the alert message to the payee. The mode may be a variety of communications devices including but not limited to another computer system, a telephone messaging or paging system, or a facsimile machine. Once the communications mode is selected by the payee FI, usually by pre-arrangement with the payee, the alert messages are queued and sent to the payees, 470a, 470b, 470c, 470d, 470e.

From the above, it is apparent that the present invention provides, for use with an electronic item presentment system in which a payor FI transmits to a presenting FI a return item notification corresponding to an item presented by the presenting FI to the payor FI or in which the payor FI makes a determination that an item is "on-us," a system for, and a method of, alerting a payee of the item of the return item notification or determination. In one embodiment, the system includes: (1) an alert filter that determines whether the payee is to be alerted of the return item notification and (2) an alert transmitter, coupled to the alert filter, that generates an electronic alert message for the payee only when the alert filter determines that the payee is to be alerted of the return item notification. In another embodiment, the system includes: (1) an alert assembler that combines "on-us" data of the payor FI and data pertaining to the item to assemble an electronic alert message and (2) an alert transmitter, coupled to the alert assembler, that transmits the electronic alert message to the payee.

Although the present invention has been described in detail, those skilled in the art should understand that they can make various changes, substitutions and alterations herein without departing from the spirit and scope of the invention in its broadest form.

## Claims

1. For use with an electronic item presentment system in which a payor financial institution (FI) transmits to a presenting FI a return item notification corresponding to an item presented by said presenting FI to said payor FI, a system for alerting a payee of said item of said return item notification, comprising:
an alert filter that determines whether said payee is to be alerted of said return item notification; and
an alert transmitter, coupled to said alert filter, that generates an electronic alert message for said payee only when said alert filter determines that said payee is to be alerted of said return item notification.

2. The system as recited in Claim 1 wherein said electronic alert message contains said return item notification.

3. The system as recited in Claim 1 wherein said alert filter further determines a communication mode for transmission of said electronic alert message, said alert transmitter transmitting said electronic alert message to said payee via said communication mode.

4. The system as recited in Claim 1 wherein said payor FI transmits said return item notification via at least one intermediary.

5. The system as recited in Claim 1 wherein said return item notification is selected from the group consisting of:
a preliminary return item notification, and
a final return item notification.

6. The system as recited in Claim 1 wherein said presenting FI presents said item to said payor FI a second time, said alert filter further determining whether said payee is to be alerted said second time.

7. The system as recited in Claim 1 wherein said return item notification causes said presenting FI to debit an account of said payee.

8. For use with an electronic item presentment system in which a payor financial institution (FI) makes a determination that an item is "on-us," a system for alerting a payee of said item of said determination, comprising:
an alert assembler that combines "on-us" data of said payor FI and data pertaining to said item to assemble an electronic alert message; and
an alert transmitter, coupled to said alert assembler, that transmits said electronic alert message to said payee.

9. The system as recited in Claim 8 further comprising an alert filter that determines whether said payee is to be alerted of said determination, said alert transmitter transmitting said electronic alert message to said payee only when said alert filter determines that said payee is to be alerted of said determination.

10. The system as recited in Claim 9 wherein said alert filter further determines a communication mode for transmission of said electronic alert message, said alert transmitter transmitting said electronic alert message to said payee via said communication mode.
